# EUROPEAN PATENT SPECIFICATION

(11) **EP 0 684 405 B1**
(45) Date of publication and mention of the grant of the patent: **15.07.1998**
(21) Application number: 95111810.8
(22) Date of filing: 01.04.1993
(51) Int. Cl.: F16F 7/06, B60N 3/08, B60R 7/04

(54) **Friction damper**
Reibungsdämpfer
Amortisseur à friction

(30) Priority: 03.04.1992 JP 28182/92 U; 03.04.1992 JP 28183/92 U
(43) Date of publication of application: 29.11.1995
(62) Divisional of application: 93105443.1
(73) Proprietor: Kato Hatsujo Kaisha Ltd., Yokohama-shi Kanagawa-ken (JP)
(72) Inventor: Umemura, Haruyuki, Chigasaki-shi, Kanagawa-ken (JP); Ogawa, Yasuyuki, Yokosuka-shi, Kanagawa-ken (JP); Miyoshi, Masakazu, Yokohama-shi, Kanagawa-ken (JP)
(74) Representative: Lewald, Dietrich, Dipl.-Ing.

(56) References cited:
- DE-A- 3 637 103
- FR-A- 645 611
- FR-A- 1 328 493
- GB-A- 288 108
- GB-A- 318 553
- US-A- 4 494 806
- US-A- 4 660 881
- US-A- 4 696 663

## Description

This invention relates to a friction damper for a push-open type member, such as an ashtray in an automobile or a switching lid in a household electrical appliance, for example, which is kept biased constantly by a spring pressure in the opening direction, for the purpose of exerting a braking force on the member during the opening motion thereof.

As one example of the conventional friction damper of tnis class, the invention which is disclosed in Japanese Utility Model Publication No. 57-49216 may be cited.

This conventional friction damper, though not specifically illustrated diagrammatically herein, is provided with a housing having a storing chamber, a rotor rotatably disposed in the storing chamber of the housing, a toothed wheel interlocked with the leading terminal part of the rotor, and a plurality of metallic leaf spring members, the basal parts of which assume the shape of the letter J suitable for fast attachment to the rotor, and is constructed so as to exert a braking force upon such a push-open type member as mentioned above by virtue of the friction resistance which is produced between the curved leading terminal faces of the leaf spring members and the inner wall surface of the storing chamber of the housing when the curved leading terminal faces of the leaf spring members are slid along the inner wall surface of the storing chamber.

The use of the conventional friction damper for controlling the push-open type ashtray in an automobile, therefore, is attained by fixing the housing of the damper to one of the ashtray case and the frame for concealably retaining the ashtray case, providing a rack for the other of the two parts, and causing the rack to be interlocked with the toothed wheel of the damper. Consequently, when the ashtray case in the shut position is relieved of the locked state and allowed to start moving in the opening direction by dint of the spring pressure, the toothed wheel is rotated in response to the motion of the ashtray case, the rotor is induced to turn in tandem with the J-shaped leaf spring members in the same direction, and the curved leading terminal faces of the leaf spring members, and the inner wall surface of the housing jointly produce friction resistance. As a result, a braking force is exerted on the ashtray case so that the ashtray case is infallibly enabled to move slowly in the opening direction.

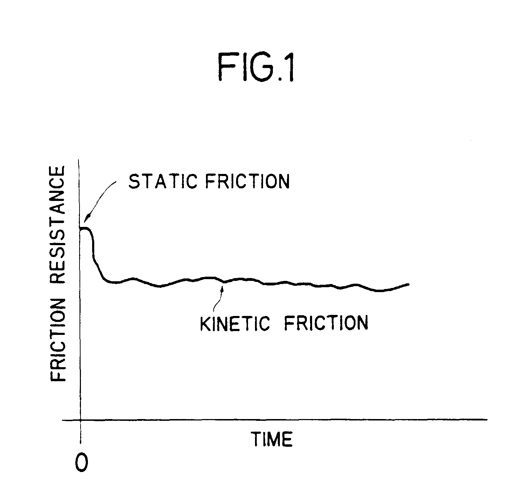

Indeed, the conventional friction damper has the advantage that it is only meagerly susceptible to the influence of change in temperature as compared with the oil damper and has absolutely no possibility of oil leakage. It nevertheless entails the disadvantage that the braking resistance inevitably differs when the damper starts its operation and when it is normally operating because the static friction is greater than the kinetic friction of the leaf spring members as illustrated in Figure 1.

When the breaking force to be exerted on the push-open type member is set in conformity with the kinetic friction, therefore, the large starting torque due to the static friction has an adverse effect of obstructing the push-open type member such as the ashtray case from moving in the opening direction. When the braking force is conversely set in conformity with the static friction, there is a very fair possibility that the magnitude of the kinetic friction will be too small to exert an ample braking force on the push-open type member.

A friction damper according to the preamble of claim 1 is known from FR-A-1 328 493.

The main object of this invention is to provide a friction damper device which gives an effective solution to the problem of the prior art damper.

To accomplish the object described above, according to the present invention there is provided a friction damper for a push-open type member defined by the features of claim 1.

According to the present invention means are provided for allowing the push-open type member to start moving smoothly in the opening direction.

The above and other objects and advantages of this invention will be described in detail below with reference to the accompanying drawings.

Figure 1 is a diagram showing the magnitudes of static friction and kinetic friction produced in a leaf spring member.

Figure 2 is a perspective view illustrating in an exploded state a friction damper not according to the present invention.

Figure 3 is an explanatory diagram illustrating an idle empty area formed between a toothed wheel and a rotor of the damper.

Figure 4 is a longitudinal cross section illustrating the damper in an assembled state.

Figure 5 is an explanatory diagram illustrating the state which is assumed by the toothed wheel after it has been idly rotated over the range of the idle empty area in the X direction.

Figure 6 is an explanatory diagram illustrating the state which is assumed by the toothed wheel after it has been idly rotated over the range of the idle empty area in the Y direction.

Figure 7 is a plan view illustrating a friction damper as an embodiment of this invention, with certain component parts removed for the sake of facilitating illustration.

Figure 8 is a plan view illustrating the state which is assumed by a rotor and a toothed wheel of the damper after they have been jointly rotated idly over the range of the idle empty area in the X direction.

Figure 9 is a plan view illustrating a modification of the embodiment of the invention, with certain component parts removed for the sake of facilitating illustration.

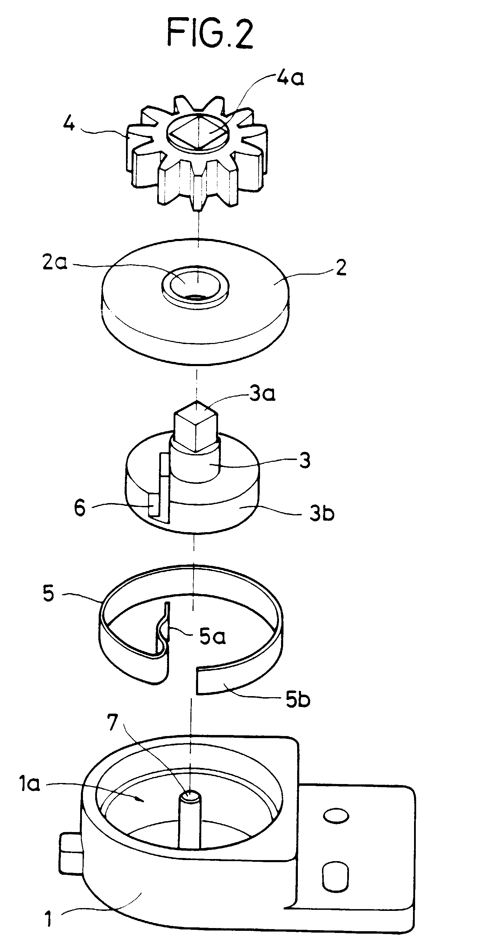

The friction damper shown in Figure 2 through Figure 6 is not a friction damper according to the present invention. Its description is nevertheless necessary in this place because the subsequent description of the damper according to the invention frequently refers to it and would be incomplete without it. The damper is provided with a housing 1 having a storing chamber 1a opening on one surface side, a cap 2 for shutting the opening of the storing chamber 1a of the housing 1, a rotor 3 disposed rotatably inside the storing chamber 1a of the housing 1, a toothed wheel 4 interlocked with a leading terminal part 3a of the rotor 3 protruding outwardly through a cap hole 2a, and an annular metallic leaf spring member 5 attached fast at one terminal part 5a thereof to an attaching groove 6 formed in a disklike basal part 3b of the rotor 3, and is constructed so as to exert a braking force on a given push-open type member by virtue of the friction resistance to be produced between the outer peripheral surface of the leaf spring member 5 and the inner wall surface of the storing chamber 1a by causing the outer peripheral surface of the leaf spring member 5 inclusive of the other terminal part 5b thereof to slide on the inner wall surface of the storing chamber 1a of the housing 1.

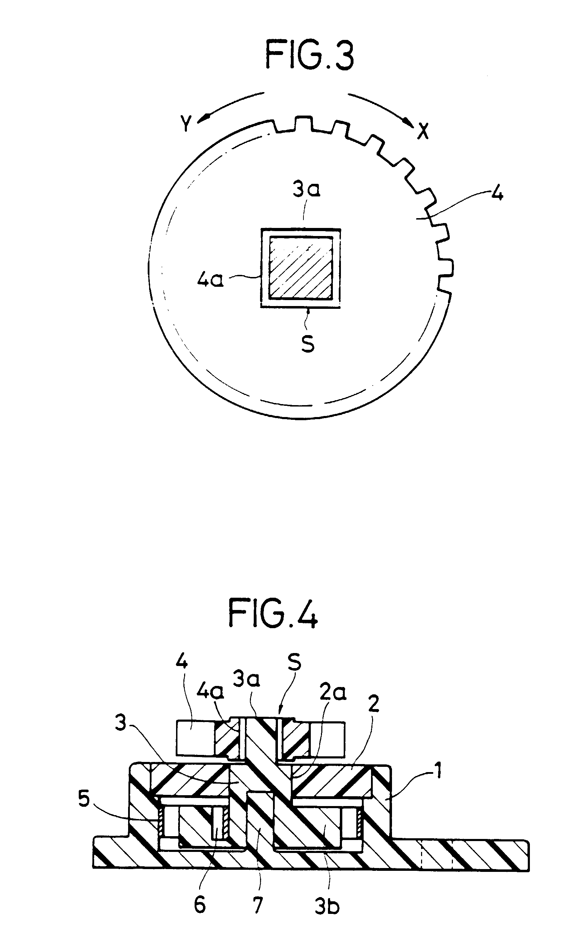

This damper, in addition to the construction described above, contemplates forming the leading terminal part 3a of the rotor 3 in an angular shape, forming an interlocking hole 4a of the toothed wheel 4 also in a similarly angular shape, and setting the angular interlocking hole 4a larger than the angular leading terminal part 3a, thereby interposing a rectangular idle empty area S uniformly between the inner boundary of the angular interlocking hole 4a and the outer boundary of the angular leading part 3a as illustrated in Figure 3 and consequently enabling the toothed wheel 4 to rotate idly over the range of the empty area S independently of the rotor 3.

In the friction damper, therefore, the rotor 3 is enabled to be rotatably supported on a support part 7 projecting from the bottom surface of the storing chamber 1a and the annular leaf spring member 5 having the outer peripheral surface thereof pressed against the inner wall surface of the storing chamber 1a to be slidably disposed inside the storing chamber 1a by inserting the one terminal part 5a of the annular leaf spring member 5 into the attaching groove 6 formed in the disklike basal part 3b and, after the one terminal part 5a of the leaf spring member 5 has been attached fast to the rotor 3, accommodating the rotor 3 in the storing chamber 1a of the housing 1 as illustrated in Figure 4.

Then the damper can be readily set in place, therefore, by shutting the opening of the storing chamber 1a with the cap 2 and connecting the toothed wheel 4 through its angular interlocking hole 4a to the angular leading terminal part 3a of the rotor 3 protruding outwardly through the hole 2a of the cap 2. Needless to say in this case, the presence of the idle empty area S necessitates provision of means which, though omitted from specific illustration herein, prevents the toothed wheel 4 from slipping out through the angular leading terminal part 3a of the rotor 3.

The application of the friction damper to a push-open type ashtray in an automobile is accomplished, as in the case of the conventional friction damper, by fixing the housing 1 of the damper through a flange part thereof to one of the ashtray case and the frame concealably retaining the ashtray case, providing a rack for the other of the two component parts, and allowing the rack to be meshed with the toothed wheel 4. In this case, the relevant component parts are so assembled that the rotor 3 rotates in the X direction (in which the leaf spring member 5 as a whole is radially expanded) when the ashtray case is opened and that the rotor 3 rotates in the Y direction (in which the leaf spring member 5 as a whole is radially contracted) in Figure 3.

When the ashtray case in the shut position is relieved of the locked state and set on the verge of moving in the opening direction by virtue of the spring pressure, in the absence of the idle empty area S the rotor 3 introduces the moving force as an input through the toothed wheel 4 and immediately rotates in the X direction while accompanying the annular leaf spring member 5.

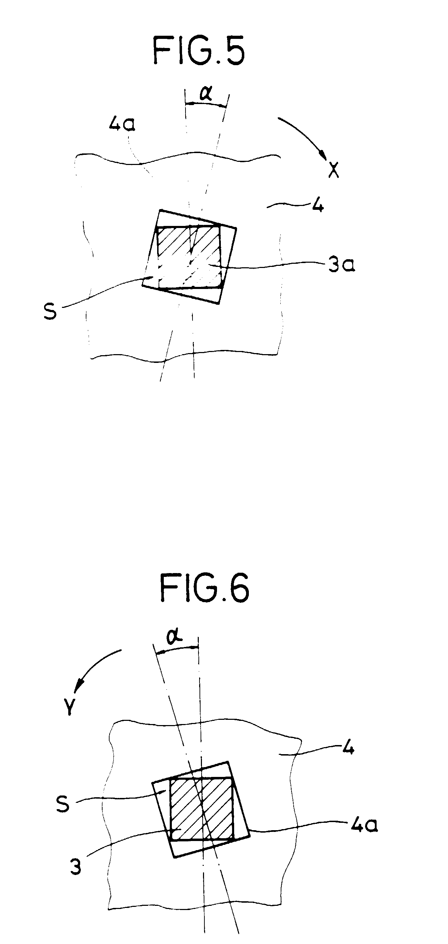

Since the idle empty area S is interposed between the angular interlocking hole 4a of the toothed wheel 4 and the angular leading terminal part 3a of the rotor 3 as described above, the toothed wheel 4 alone is idly rotated by an angle α proportionate to the idle empty area S and the ashtray case is consequently allowed to produce a free initial motion in the opening direction of its own as illustrated in Figure 5 in advance of the rotation of the rotor 3 synchronized with the ashtray case.

As a result, the edge of the angular interlocking hole 4a of the toothed wheel 4 collides against the angular leading terminal part 3a of the rotor 3 and the rotor 3 is caused by the input from the toothed wheel 4 to rotate in the X direction while being accompanied by the annular leaf spring member 5 only after the toothed wheel 4 has idly rotated in the presence of the idle empty area S. Even when the static friction gives birth to a large actuating torque, the inertial force of the ashtray case which has already started motion overcomes this large actuating torque and allows smooth rotation of the rotor 3.

As a result, the steady rotational torque arising from the kinetic friction is effectively utilized to exert a stable braking force infallibly on the ashtray case.

When the ashtray case in the opened position is to be pushed into the frame, the rotor 3 accompanied by the annular leaf spring member 5 is rotated in the Y direction this time. Again in this case, the rotor 3 accompanied by the annular leaf spring member 5 is allowed to rotate in the Y direction only after the toothed wheel 4 has idly rotated by an angle α proportionate to the idle empty area S and the edge of the angular interlocking hole 4a of the toothed wheel 4 has subsequently collided against the angular leading terminal part 3a of the rotor 3 as illustrated in Figure 6.

In this case, the annular leaf spring member 5 produces a sliding motion while keeping its one terminal part 5a closely approximated to its other terminal part 5b as though causing the entirety thereof to contract radially. Thus, the friction resistance generated between the outer peripheral surface of the leaf spring member 5 and the inner wall surface of the storing chamber 1a is decreased to the extent of enabling the ashtray case to be smoothly pushed with feeble force into the frame.

The friction damper described above represents a case of enabling the idle empty area S for allowing idle rotation of the toothed wheel 4 in a fixed range to be formed in a rectangular shape between the angular interlocking hole 4a and the angular leading terminal part 3a.

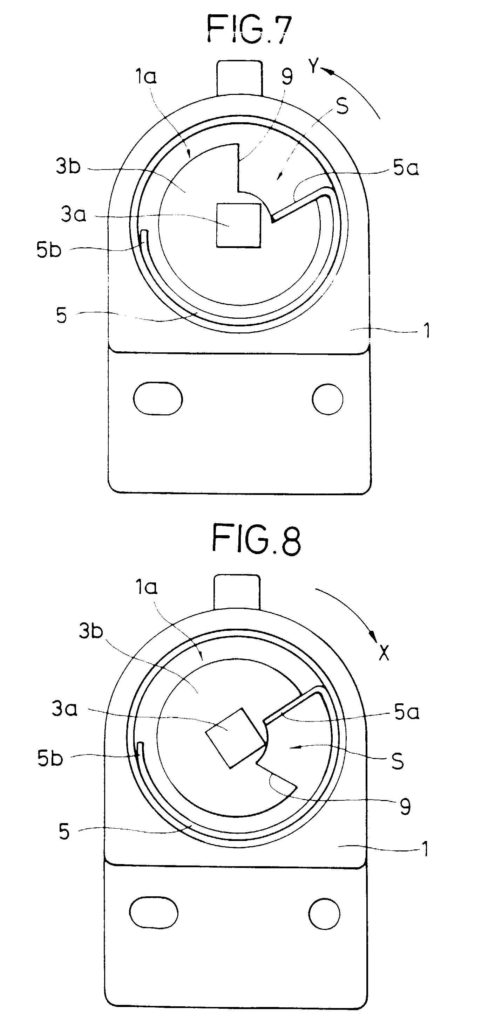

Now, the friction damper according to the invention will be described with reference to Figure 7 and Figure 8. In contrast to the friction damper described before which forms the idle empty area S for allowing idle rotation of the toothed wheel 4 by virtue of the relation between the interlocking hole 4a of the toothed wheel 4 and the leading terminal part 3a of the rotor, the friction damper of the invention forms the idle empty area S for allowing idle rotation of the toothed wheel by making use of the relation between the rotor 3 and the annular leaf spring member 5 provided with mutually separated opposite terminal parts 5a and 5b. In the remaining basic construction, it is identical with the friction damper described before.

Specifically, while the damper according to the invention, unlike the one described before, contemplates interlocking the interlocking hole of the toothed wheel stationarily to the leading terminal part 3a of the rotor 3, it is characterized by the fact that a notch 9 for defining the idle empty area S is formed over a prescribed range in the disk like basal part 3b of the rotor 3 and one bent terminal part 5a of the annular leaf spring member 5 in its free state is made to confront the interior of the idle empty area S as illustrated in Figure 7.

The damper according to the invention, therefore, is not required to form on the basal part 3b side of the rotor 3 the attaching groove 6 of the first embodiment for stationarily securing the one terminal part 5a of the annular leaf spring member 5.

In the friction damper described before, when the ashtray case in the shut position is relieved of the locked state and set on the verge of moving in the opening direction by virtue of the spring pressure, the toothed wheel 4 alone is idly rotated in advance of the rotation of the rotor 3 interlocked with the ashtray case. In contrast thereto, in the friction damper of the invention, owing to the formation of the idle empty area S between the rotor 3 and the annular leaf spring member 5 as described above, the rotor 3 accompanied by the annular leaf spring member 5 is allowed by the input from the toothed wheel to rotate substantially in the X direction only after the toothed wheel has produced idle rotation proportionate to the range of the notched idle empty area S in tandem with the rotor 3 and allowed the ashtray case to produce a free initial motion in the opening direction, and the lateral edge of the idle empty area S defined on the rotor 3 side has collided against the one terminal part 5a of the leaf spring member 5 as illustrated in Figure 8.

Even when the static friction happens to give birth to a large actuating torque in this case, the inertial force of the ashtray case which has already started an initial motion overcomes the large actuating torque and enables the rotor 3 to rotate smoothly. According to the invention, therefore, the steady rotational torque arising from the kinetic friction can be effectively utilized for infallibly exerting a stable braking force on the ashtray case.

When the ashtray case in the opened position is to be pushed into the frame, the rotor 3 accompanied by the annular leaf spring member 5 is rotated in the Y direction after the toothed wheel 4 and the rotor 3 have been jointly rotated idly in the range proportionate to the idle empty area S and is allowed to assume the state illustrated in Figure 7. Even in this case, the annular leaf spring member 5 produces a sliding motion while keeping its one terminal part 5a closely approximated to its other terminal part 5b as though causing the entirety thereof to contract radially. Thus, in the same manner as in the friction damper described before, the friction resistance generated between the outer peripheral surface of the leaf spring member 5 and the inner wall surface of the storing chamber 1a is effectively decreased to the extent of enabling the ashtray case to be smoothly pushed into the frame with feeble force.

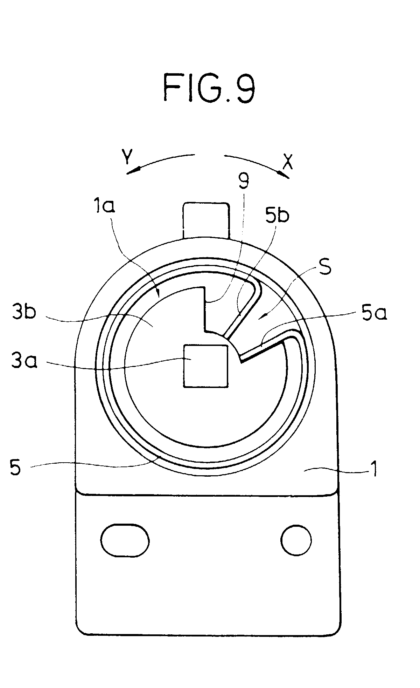

The damper according to the invention described thus far represents a case of enabling only the one terminal part 5a of the annular leaf spring member 5 in a free state to confront the interior of the idle empty area S which is formed in the disklike basal part 3b of the rotor 3. Optionally, the same operation and effect of the friction damper as described above can be attained under the same principle by allowing additionally the other bent terminal part 5b of the leaf spring member 5 to confront in a free state to the interior of the idle empty area S as illustrated in Figure 9, thereby enabling the lateral edge of the idle empty area S to collide against the other terminal part 5b of the leaf spring member 5 when the toothed wheel 4 and the rotor 3 are jointly rotated in the X direction and conversely the lateral edge of the idle empty area S to collide against the one terminal part 5a of the leaf spring member 5 when the toothed wheel 4 and the rotor 3 are jointly rotated in the Y direction.

Owing to the adoption of the construction described above, this nvention allows effective utilization of the steady rotational torque rising from the kinetic friction as the braking force without being ffected by the influence of the large actuating torque due to the tatic friction. Even when the braking force to be used is set in onformity with the kinetic friction, the possibility of a given push-open type member such as, for example, an ashtray case being prevented from moving in the opening direction is completely eliminated. Thus, the friction damper of this invention permits stable and infallible control of the speed of the push-open type member.

## Claims

1. A friction damper for a push-open type member, comprising:
a housing (1) having a storing chamber (1a);
a rotor (3) having a leading terminal part (3a) and disposed rotatably in said storing chamber (1a) of said housing (1);
a leaf spring member (5) attached fast to said rotor (3) and adapted to slide on an inner wall surface of said storing chamber (1a) and thereby exerting a bracking force on the push-open type member by virtue of friction resistance being generated between an outer peripheral surface of said leaf spring member (5) and said inner wall surface of said storing chamber (1a) by causing the outer peripheral surface of said leaf spring member (5) to slide along the inner wall surface of said storing chamber (1a) of said housing (1); said leaf spring member (5) being formed in an annular shape provided with mutually separated terminal parts (5a; 5b),
characterized by
a toothed wheel (4) having an interlocking hole (4a) for interlocking said toothed wheel (4) with the leading terminal part (3a) of said rotor (3); and
means for allowing the push-open type member to start moving smoothly in an opening direction,
wherein said rotor (3) is formed with a notched idle empty area (S), at least one of the terminal parts of said annular leaf spring member (5) is caused in a free state to confront an interior of said notched idle empty area (S), said means comprises said at least one of the terminal parts of said annular leaf spring member (5) and said notched idle empty area (S), and thereby said toothed wheel (4) and said rotor (3) are jointly allowed to be rotated in the range of said notched idle empty area (S).

## Patentansprüche

1. Reibungsdämpfer für ein Element vom Aufschiebetyp, umfassend:
ein Gehäuse (1) mit einer Speicherkammer (1a);
einen Rotor (3) mit einem vorderen Endteil (3a), der drehbar in dieser Speicherkammer (1a) dieses Gehäuses (1) angeordnet ist; ein Blattfederelement (5), das fest an diesem Rotor (3) befestigt und so ausgelegt ist, daß es auf einer Innenwandfläche dieser Speicherkammer (1a) gleitet und hierdurch eine Bremskraft auf das Element vom Aufschiebetyp aufgrund des Reibungswiderstandes ausübt, der zwischen einer Außenumfangsfläche dieses Blattfederelements (5) und dieser Innenwandfläche dieser Speicherkammer (1a) erzeugt wird, indem die Außenumfangsfläche dieses Blattfederelements (5) veranlaßt wird, längs der Innenwandfläche dieser Speicherkammer (1a) dieses Gehäuses (1) zu gleiten, wobei dieses Blattfederelement (5) in einer ringförmigen Gestalt ausgebildet ist, die mit voneinander getrennten Endteilen (5a; 5b) versehen ist,
gekennzeichnet durch
ein Zahnrad (4) mit einem Verriegelungsloch (4a) zur Verriegelung dieses Zahnrades (4) gegen den vorderen Endteil (3a) dieses Rotors (3); und durch
Mittel, die es dem Element vom Aufschiebetyp erlauben, mit einer geschmeidigen Bewegung in einer öffnungsrichtung zu beginnen, wobei dieser Rotor (3) mit einer mit Einkerbung versehenen Freifläche (S) ausgebildet ist, und wenigstens eines der Endteile dieses ringförmigen Blattfederelements (5) veranlaßt wird, in einem freien Zustand einer Innenseite dieser mit Einkerbung versehenen losen oder freien Fläche (S) gegenüberzustehen, wobei dieses Mittel wenigstens eines der Endteile dieses ringförmigen Blattfederelements (5) und diese mit Einkerbung versehene lose Freifläche (S) umfaßt, und hierdurch dieses Zahnrad (4) und dieser Rotor (3) gemeinsam in die Lage versetzt werden, sich im Bereich der mit Kerbe versehenen losen Freifläche (S) zugedreht zu werden.

## Revendications

1. Amortisseur à friction pour un organe du type à ouverture par poussée, comprenant :
un boîtier (1) ayant une chambre de réception (1a) ;
un rotor (3) ayant un embout de tête (3a) et disposé de façon tournante dans ladite chambre de réception (1a) dudit boîtier (1) ;
un élément de ressort à lame (5) fixé audit rotor (3) et agencé de manière à glisser sur une surface de paroi intérieure de ladite chambre de réception (1a) et à exercer ainsi une force de freinage sur l'organe du type à ouverture par poussée,en raison de la résistance de frottement engendrée entre une surface périphérique extérieure dudit élément de ressort à lame (5) et la dite surface de paroi intérieure de ladite chambre de réception (1a) lorsqu'on fait fait glisser la surface périphérique extérieure dudit élément de ressort à lame (5) le long de la surface de paroi intérieure de ladite chambre de réception (1a) dudit boîtier, ledit élément de ressort à lame (5) étant formé en une configuration annulaire qui présente des parties terminales mutuellement séparées (5a;5b) ;
caractérisé en ce qu'il comprend :
une roue dentée (4) comportant un trou d'accouplement (4a) pour accouplement de ladite roue dentée (4) avec l'embout de tête (3a) dudit rotor (3) ; et
des moyens pour permettre à l'organe du type à ouverture par poussée de commencer à se déplacer doucement dans une direction d'ouverture,
dans lequel ledit rotor (3) comporte une région d'encoche vide inactive (S), au moins une des parties terminales dudit élément de ressort à lame annulaire (5) est amenée dans un état libre en application contre un intérieur de ladite région d'encoche vide inactive (S), lesdits moyens comprennent ladite au moins une des parties terminales dudit élément de ressort à lame annulaire (5) et ladite région d'encoche vide inactive (S), et ladite roue dentée (4) et ledit rotor (3) peuvent ainsi tourner conjointement dans les limites de ladite région d'encoche vide inactive (S).
